Europäisches Patentamt

European Patent Office

Office européen des brevets

(11) Publication number: **0 170 759**
A2

# (12) EUROPEAN PATENT APPLICATION

(21) Application number: **84830302.0**

(22) Date of filing: **13.11.84**

(51) Int. Cl.⁴: **B 62 J 39/00**

(30) Priority: **11.07.84 IT 2253584 U**

(43) Date of publication of application: **12.02.86**
**Bulletin 86/7**

(84) Designated Contracting States: **BE CH DE FR GB LI NL**

(71) Applicant: **TT TOYS TOYS S.p.A., Via Cassino d'Alberi, 13, I-20067 Tribiano (Milano) (IT)**

(72) Inventor: **Vezzoli, Luigi, Via Cassino d'Alberi, 31, 20067 Tribiano (Milano) (IT)**

(74) Representative: **Cicogna, Franco, Ufficio Internazionale Brevetti Dott.Prof. Franco Cicogna Via Visconti di Modrone, 14/A, I-20122 Milano (IT)**

(54) **Flexible stick structure for use in limiting the movement of an infant's vehicle.**

(57) An infant's tricycle or like vehicle can be restrained by a stick structure comprising a rigid tubular element (1, 1') formed in two parts joined together and carrying, at one end, a handle (4) fixed to the tubular element (1') by a swivel connection, and at the other end, an attachment by which the stick structure can be fixed to an infant's vehicle. The attachment (6) is joined to the tubular element (1) by a resilient coupling (5, 7, 8, 8') in the form of a tubular spring (5) encased within an outer sheath in the form of a helical coil (7) embedded at each end in two respective sleeves (8, 8') surrounding the tubular element (1) at one end and the attachment device (6) at the other.

- 1 -

Flexible stick structure for use in limiting the
movement of an infant's vehicle.

The present invention relates to a flexible stick structure
for use in limiting the freedom of movement of an infant
on a vehicle such as a tricycle, bicycle or other
vehicle.

As is known, in an urban environment, infants riding on
pedal operated or electrically operated tricycles, bicycles, toy cars and like vehicles, are at risk from
certain hazards, even if accompanied, because the infant, being able to steer the vehicle by means of a
handlebar or steering wheel, can go in unwanted directions, particularly those which may be dangerous, inconvenient or out of the reach of adult control.

The present invention seeks to avoid this disadvantage
by providing a flexible stick structure which allows
the movement of pedal or electric vehicles for infants
or children to be controlled and governed. In particular, the present invention seeks to provide a flexible stick structure for the control and government of
infants' or childrens' vehicles, which allows the companion a wide freedom of movement without restricting the freedom of movement of the infant or child beyond that necessary for safety and convenience, and in particular which leaves the child the widest freedom of manoeuvre on the handlebars or steering wheel.

According to the present invention, there is provided a flexible stick structure attachable to an infant's vehicle for exercising a controlling restraint thereon, characterised in that it comprises a tubular element formed in two or more parts fixedly connected together, provided at one end with a handle which is rotatable about an axis coaxial with the tubular element itself, and at the other end with a flexible portion which is attachable to the vehicle to be controlled.

One way of carrying out the invention is described in detail below with reference to the drawings which illustrate only one specific embodiment, in which:

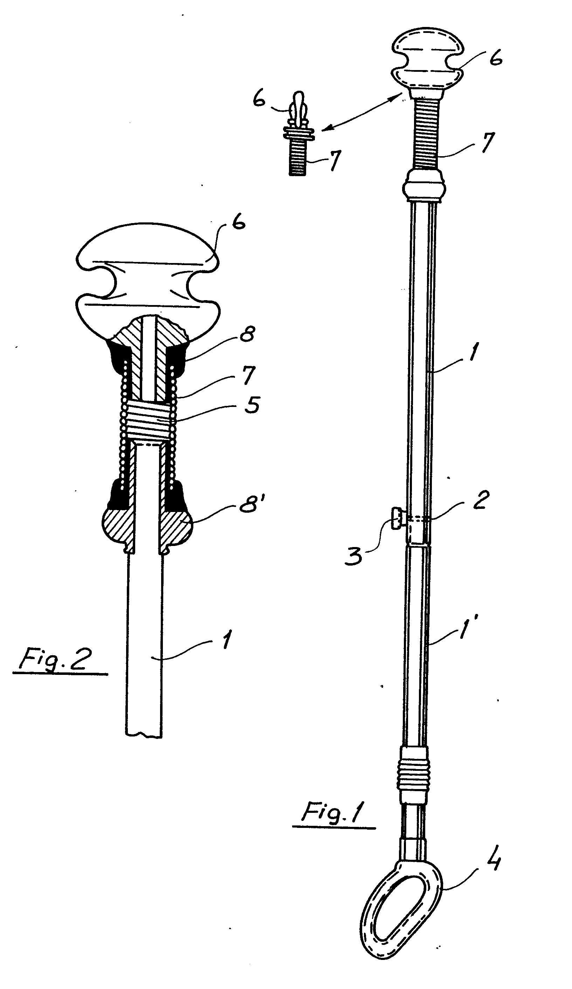

Figure 1 is a side view of a stick structure formed as an embodiment of the invention with a detail view, at right angles to the side view of the engagement device; and

Figure 2 is a view partially in section, of the flexible portion of the stick of the invention.

Referring now to the drawings, the flexible stick structure illustrated comprises a tubular element formed in two pieces 1 and 1', one of which fits into the other and is locked in place by means of a screw 2 on which is engaged a nut with a knob 3. In an alternative embodiment (not shown) this is achieved with different,

- 3 -

but functionally equivalent, members.

At one end the tubular element 1' is connected, by means of a swivel connection, to a shaped handle 4 which can perform rotational movements about 360°. At the opposite end, the tubular element 1 is fixed, by means of a helical spring 5, to an attachment device 6. This connection is flexible owing to the spring 4 and is covered by a casing 7, in this embodiment constituted by a cylindrical helical spring of circular section, the two ends of which are embedded in corresponding sleeves 8 and 8'.

0170759

- 4 -

Claims:

1.     A flexible stick structure attachable to an infant's vehicle for exercising a controlling restraint thereon, characterised in that it comprises a tubular element (1,1') formed in two or more parts fixedly connected together, provided at one end with a handle (4) which is rotatable about an axis coaxial with the tubular element (1,11) itself, and at the other end with a flexible portion (5,7,8,8') which is attachable to the vehicle to be controlled.

2.     A flexible stick structure according to Claim 1, characterised in that the connection of the parts (1,1') of the said tubular element is obtained by means of one or more interfitting portions locked by means of a screw (2) on which engages a corresponding nut (3) with a knob or other grip means.

3.     A flexible stick structure according to Claim 1 or Claim 2, characterised in that the said flexible portion (5,7,8,8') is fitted to the said other end of the tubular element (1,1') by means of a helical spring (5), and carries an attachment device (6); the said flexible portion (5,7,8,8') being rendered flexible by the said spring (5) and being covered by a cladding constituted by a cylindrical helical spring (7) of circular section, the two ends of which are embedded in corresponding sleeves (8,8').

1/1

0170759

6

6

7

7

6

8

7

5

8'

1

_Fig.2_

1

1

2

3

1'

_Fig.1_

4